# EUROPEAN PATENT SPECIFICATION

(11) **EP 0 957 298 B1**
(45) Date of publication and mention of the grant of the patent: **26.05.2004**
(21) Application number: 99105493.3
(22) Date of filing: 17.03.1999
(51) Int. Cl.: F16K 7/16

(54) **Valve**
Durchflussmengen-Regelventil, insbesondere für begaste Flüssigkeiten
Vanne de régulation de débit, en particulier pour fluides gazifiés

(30) Priority: 11.05.1998 SE 9801624
(43) Date of publication of application: 17.11.1999
(73) Proprietor: Maquet Critical Care AB, 171 95 Solna (SE)
(72) Inventor: Rydin, Göran, 183 50 Täby (SE)
(74) Representative: Samzelius, Roger Mikael

(56) References cited:
- EP-A2- 0 266 963
- US-A- 5 518 015

## Description

The present invention relates to a valve according to the preamble of claim 1. Such a valve is known from EP-A- 266 963.

Valves for regulating gases are available in many different versions, all with varying performance (e.g. in terms of dynamic regulatory range and accuracy), operating reliability and operating costs.

The aforementioned properties are important in certain applications, such as in valves in ventilators for respiratory care. Such valves must have a wide dynamic range and great accuracy for correct ventilation of all patient categories. Their operating reliability must be great and operating costs low.

One such valve is described in US-A-5,265,594. The known valve is an electromagnetic, servo-controlled membrane valve.

Even if the known valve displays excellent performance and operating reliability, it is also relatively complex and energy demanding.

It is also know to use stepper motors for actuating a value body axially. EP 266 963 and US 5 518 015 show such valves.

One object of the invention is to achieve a valve with an alternative design, offering basically the same high performance and great operating reliability, that is less complex and employs a less complex regulatory system with lower operating costs.

One such valve is achieved in accordance with the invention in that the valve is devised according to claim 1.

Advantageous embodiments of the valve are evident from the dependent claims to claim 1.

Regulation is facilitated when the valve body is connected to a stepper motor. The valve body's (continuous) non-linear movement against the valve seat results in a large dynamic range for the stepper motor within a small regulatory area, and accuracy at small flows is retained. The stepper motor is also powerful and able to cope with very large counter-pressures without valve leakage.

Continuous non-linear movement is in this case used as meaning a non-linear screw-line as opposed to a screw-line with step-wise linear portions of different inclination.

The valve according to the invention is described below in greater detail, referring to the figures in which
FIG. 1 shows one embodiment of the valve according to the invention,
FIG. 2 shows a valve body in the valve according to FIG. 1, and
FIG. 3 shows an example of the non-linear movement of a valve body.

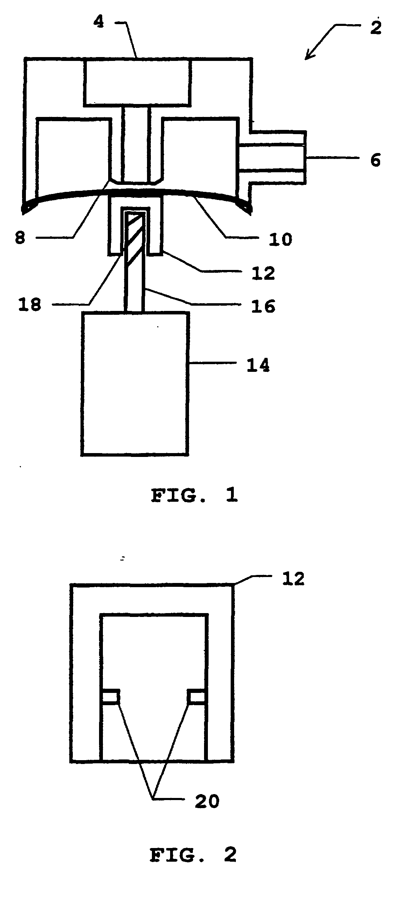

FIG. 1 shows an embodiment of the valve according to the invention. The valve 2 has an inlet 4 for unregulated gas and an outlet 6 for regulated gas. The valve 2 has a valve seat 8 against which a membrane 10 can be pressed to a greater or lesser degree by a valve body 12 to regulate the flow of gas through the valve 2.

The valve body's 12 position in relation to the valve seat 8 is regulated, in turn, by a stepper motor 14 which is connected by a shaft 16 to the valve body. The shaft 16 is devised with a continuous, non-linear thread 18 enabling accurate regulation over a wide flow range.

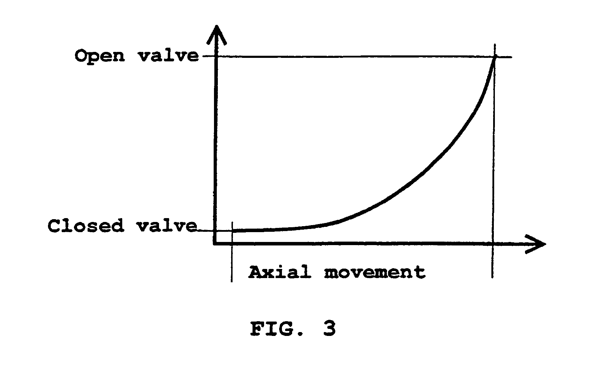

The movement of the non-linear thread 18 is exemplified in FIG. 3, which shows one possible non-linear curve for the valve body's 12 axial movement between an open and closed valve.

The stepper motor 14 is robust and reliable, making the valve 2 particularly suitable for devices used in respiratory care.

FIG. 2 shows an enlarged view of the valve body 12. Two pins 20 protrude from the inner wall of the valve body 12 and mate with the thread 18 on the shaft 16 of the stepper motor 14 (FIG. 1). This means that the valve body 12 moves primarily only in an axial direction and not in a radial direction.

In FIG. 1 the thread 18 is shown with three turns, but it could also have more turns or, preferably, fewer. In principle, the thread 18 designates the two extreme positions, i.e. a closed valve 2 and a completely open valve 2. The non-linear design should be devised so non-linearity increases with the degree of valve 2 opening.

The thread 18 can also be provided on a coupling part between the shaft and the valve body or arranged internally inside the valve body. In the latter instance, the shaft should be devised so the valve body moves essentially in an axial direction and not in a radial direction.

## Claims

1. A valve (2) for regulating a gas flow, comprising a valve seat (8) and a valve body (12), movable against the valve seat (8), the valve body (12) is arranged to move axially against the valve seat (8) and a stepper motor (14) is arranged to actuate the valve body's (12) axial movement against the valve seat (8), **characterized in that** the stepper motor (14) and valve body (12) are devised so the valve body (12) performs continuous, non-linear, axial movements against the valve seat (8).

2. The valve according to claim 1, **characterised in that** the stepper motor (4) has a shaft pivot (16) with a non-linear thread (18).

3. The valve according to claim 1 or 2, **characterised in that** the valve body (12) comprises a coupling part provided with a non-linear thread.

4. The valve according to any of the above claims, **characterised in that** the stepper motor's (14) shaft rotates up to 2, preferably up to 0.5, revolutions between two end positions corresponding to a completely open valve and a closed valve.

5. The valve according to any of the above claims, **characterised by** a membrane (10) arranged between the valve seat (8) and the valve body (12).

## Patentansprüche

1. Ein Ventil (2) zum Regeln eines Gasflusses mit einem Ventilsitz (8) und einem Ventilkörper (12), der gegenüber dem Ventilsitz (8) beweglich ist, wobei der Ventilkörper (12) so angeordnet ist, dass er sich axial gegenüber dem Ventilsitz (8) bewegt, und einem Schrittmotor (14), angeordnet, um die axiale Bewegung des Ventilkörpers (12) gegenüber dem Ventilsitz (8) auszulösen, **dadurch gekennzeichnet, dass** der Schrittmotor (14) und der Ventilkörper (12) so ausgebildet sind, dass der Ventilkörper (12) kontinuierliche, nichtlineare, axiale Bewegungen gegenüber dem Ventilsitz (8) durchführt.

2. Das Ventil gemäß Anspruch 1, **dadurch gekennzeichnet, dass** der Schrittmotor (14) eine Welle (16) mit einem nichtlinearen Gewindegang (18) hat.

3. Das Ventil gemäß Anspruch 1 oder 2, **dadurch gekennzeichnet, dass** der Ventilkörper (12) ein Kupplungsteil aufweist, das mit einem nichtlinearen Gewinde versehen ist.

4. Das Ventil gemäß einem der vorhergehenden Ansprüche, **dadurch gekennzeichnet, dass** die Welle des Schrittmotors (14) bis zu 2 mal, vorzugsweise bis zu 0.5 mal zwischen zwei Endpositionen rotiert, die zu einem vollständig offenen und geschlossenen Ventil korrespondieren.

5. Das Ventil gemäß einem der vorhergehenden Ansprüche, **dadurch gekennzeichnet, dass** eine Membran (10) zwischen dem Ventilsitz (8) und dem Ventilkörper (12) angeordnet ist.

## Revendications

1. Vanne (2) de régulation d'un courant de gaz comprenant un siège (8) de vanne et un corps (12) de vanne, mobiles contre le siège (8) de vanne, le corps (12) de vanne étant disposé de manière à se mouvoir axialement contre le siège (8) de vanne et un moteur (14) pas à pas est disposé de manière à provoquer le mouvement axial du corps (12) de vanne contre le siège (8) de vanne, **caractérisé en ce que** le moteur (14) pas à pas et le corps (12) de vanne sont conçus de façon à ce que le corps (12) de vanne effectue des mouvements axiaux, continus et non linéaires contre le siège (8) de vanne.

2. Vanne suivant la revendication 1, **caractérisée en ce que** le moteur (4) pas à pas a un tourillon (16) ayant un filetage (18) non linéaire.

3. Vanne suivant la revendication 1 ou 2, **caractérisée en ce que** le corps (12) de vanne comprend une partie de couplage munie d'un filetage non linéaire.

4. Vanne suivant l'une quelconque des revendications ci-dessus, **caractérisée en ce que** l'arbre du moteur (14) pas à pas tourne jusqu'à deux tours et, de préférence, jusqu'à 0,5 tour entre deux positions d'extrémité correspondant à une vanne complètement ouverte et à une vanne fermée.

5. Vanne suivant l'une quelconque des revendications ci-dessus, **caractérisée par** une membrane (10) interposée entre le siège (8) de vanne et le corps (12) de vanne.
